# EUROPÄISCHE PATENTSCHRIFT

(11) **EP 2 392 435 B1**
(45) Veröffentlichungstag und Bekanntmachung des Hinweises auf die Patenterteilung: **23.12.2020**
(21) Anmeldenummer: 11168345.4
(22) Anmeldetag: 01.06.2011
(51) Int. Cl.: B25J 9/16, G05B 19/423

(54) **Werkstück-Handhabungssystem und Verfahren zum Manipulieren von Werkstücken mittels kooperierender Manipulatoren**
Workpiece handling system and method for manipulating workpieces by means of cooperating manipulators
Système de manipulation de pièces usinées et procédé de manipulation de pièces usinées à l'aide de manipulateurs coopérants

(30) Priorität: 07.06.2010 DE 102010029745
(43) Veröffentlichungstag der Anmeldung: 07.12.2011
(73) Patentinhaber: KUKA Deutschland GmbH, 86165 Augsburg (DE)
(72) Erfinder: Bischoff, Rainer, 86163 Augsburg (DE); Guhl, Tim, 86159 Augsburg (DE); Kurth, Johannes, 86163 Augsburg (DE); Schreiber, Günther, 86316 Derching (DE); Bruyninckx, Herman, 3111 Wezemaal (BE); Smits, Ruben, 3020 Herent (BE)
(74) Vertreter: Böss, Dieter Alexander

(56) Entgegenhaltungen:
- EP-A1- 2 131 257
- EP-A2- 1 464 452
- EP-A2- 1 987 406
- JP-B2- 2 667 153
- US-A1- 2004 257 021

## Beschreibung

Die Erfindung betrifft ein Werkstück-Handhabungssystem, aufweisend mindestens zwei zur Handhabung von Werkstücken kooperierende Manipulatoren, die mittels wenigstens einer frei programmierbaren Steuervorrichtung in drei oder mehr Achsen automatisch steuerbar und/oder programmierbar sind. Die Erfindung betrifft auch ein Verfahren zum Manipulieren von Werkstücken mittels kooperierender Manipulatoren, die von wenigstens einer Steuervorrichtung gesteuert sind, insbesondere mittels eines erfindungsgemäßen Werkstück-Handhabungssystems.

Aus der EP 1 462 895 A1 ist ein Verfahren zum Steuern einer Mehrzahl von Handhabungsgeräten mit einer Anzahl von Steuerungseinheiten bekannt, die den Handhabungsgeräten zugeordnet sind, so dass jede Steuerungseinheit mindestens ein Handhabungsgerät steuert, wobei ein Bediengerät auf mehrere Steuerungseinheiten zur Steuerung der Handhabungsgeräte zugreift. Das Bediengerät dient zum manuellen Verfahren von Handhabungsgeräten wie Industrierobotern, beispielsweise im Rahmen von Lernprozessen (Teaching), oder zum Ändern von softwaregestützten Steuerprogrammen auf den Handhabungsgeräten zugeordneten Steuerungseinheiten. Das Bediengerät weist in der Regel Bedien- und Eingabeelemente, wie Steuerhebel oder Tasten, und darüber hinaus gegebenenfalls Anzeigeelemente auf, die über Kabel oder drahtlose Kommunikation mit einer Roboter-Steuerungseinheit verbunden sind.

Die US 2004/0257021 A1 beschreibt ein System umfassend einen ersten Roboterarm und einen zweiten Roboterarm, die derart von einer Robotersteuerung angesteuert werden, dass der zweite Roboterarm eine zu dem ersten Roboterarm gespiegelte Bewegung ausführt.

Die EP 1 987 406 A2 beschreibt ein System zum Steuern der Position und Orientierung eines Objekts, wobei das System aufweist: eine Messvorrichtung mit einem ersten und einem zweiten Teil, wobei der erste Teil zur Aufnahme von Kräften und Drehmomenten von einem Benutzer in der Lage ist, und mit einem Sensor, der zum Messen von Kräften und Drehmomenten in der Lage ist, die durch Veränderungen in der Position und Orientierung des ersten Teils in Relation zu dem zweiten Teil verursacht werden.

Die EP 1 464 452 A2 beschreibt ein Verfahren zum Kontrollieren eines Systems mehrerer Roboter, wobei das System mehrere Kontrolleinheiten aufweist, von denen jede ein assoziiertes Bewegungssystem aufweist, welches angeschlossene Roboter kontrolliert und Bewegungsanweisungen von mindestens einer Bewegungsanweisungsquelle empfängt, und aufweisend ein Rechnernetzwerk, über das die Kontrolleinheiten kommunizieren.

Die JP 2 667153 B2 beschreibt eine mehrarmige Vorrichtung, die aus einer Vielzahl von Armen besteht, die in der Lage sind, eine jeweilige Hand jeden Armes in eine beliebige Position innerhalb eines zulässigen Betätigungsbereichs zu bewegen, und eine Steuervorrichtung, die eine Armsteuereinrichtung zum Steuern der Betätigung jedes Arms enthält, während die Hände an den Enden der Arme ein Werkstück unterstützen.

Aufgabe der Erfindung ist es, ein Werkstück-Handhabungssystem zu schaffen und ein Verfahren bereitzustellen, das eine intuitive Handhabung von Werkstücken durch kooperierende Manipulatoren ermöglicht.

Diese Aufgabe wird erfindungsgemäß gelöst durch ein Werkstück-Handhabungssystem, aufweisend mindestens zwei zur Handhabung von Werkstücken kooperierende Manipulatoren, die mittels wenigstens einer frei programmierbaren Steuervorrichtung in drei oder mehr Achsen automatisch steuerbar und/oder programmierbar sind, wobei mindestens ein erster Manipulator in wenigstens einem seiner Freiheitsgrade zum manuell geführten Bewegen eingerichtet ist, wobei das Werkstück-Handhabungssystem zwei Greiferhälften aufweist, von denen jeweils eine Greiferhälfte von jeweils einem Manipulator getragen und geführt wird, und die Steuervorrichtung eingerichtet ist, mindestens einen zweiten Manipulator in Abhängigkeit des manuell geführten Manipulators automatisch zu steuern, wobei die Steuervorrichtung eingerichtet ist, einem der automatisch gesteuerten Manipulatoren eine zu einem der manuell gesteuerten Manipulatoren gespiegelte Bewegung ausführen zu lassen, um das Werkstück mittels den zweien Greiferhälften an zwei gegenüberliegenden Seiten einklemmend zu greifen.

Das Werkstück-Handhabungssystem kann zum Positionieren bzw. zum Transportieren beispielsweise schwerer Werkstücke, alternativ oder ergänzend zur Montage und/oder Bearbeitung des Werkstücks dienen. Statt eines einzelnen Werkstücks, das durch die mindestens zwei kooperierenden Manipulatoren gleichzeitig bearbeitet bzw. gehandhabt wird, können auch mehrere Werkstücke gleichzeitig durch die mindestens zwei kooperierenden Manipulatoren bearbeitet bzw. gehandhabt werden, insbesondere jeweils ein Werkstück durch jeweils einen Manipulator bearbeitet bzw. gehandhabt werden, wobei mehrere Werkstücke auch von jeweils einem Manipulator in synchronisierten Bewegungen bearbeitet bzw. gehandhabt werden können. Die kooperierenden Manipulatoren sind Teil eines gemeinsamen Handhabungssystems, so dass die kooperierenden Manipulatoren sich auch einen gemeinsamen Arbeitsraum teilen können. Von den kooperierenden Manipulatoren kann jeder Manipulator mit einer separaten Steuerungsvorrichtung verbunden sein. Die mehreren Steuerungsvorrichtungen können beispielsweise mittels Schnittstellen und über Datenleitungen verbunden bzw. synchronisiert sein. Die kooperierenden Manipulatoren können jedoch alternativ auch durch eine gemeinsame Steuerungsvorrichtung betrieben werden. Die gemeinsame Steuerungsvorrichtung bzw. die mehreren separaten Steuerungsvorrichtungen können zusätzlich durch eine übergeordnete bzw. nebengeordnete weitere Steuerungseinrichtung überwacht bzw. für eine kooperierende Zusammenarbeit aufeinander abgestimmt werden.

Der erste Manipulator kann in allen Freiheitsgraden d.h. beispielsweise kartesisch in den drei Raumrichtungen und drei Rotationen oder beispielsweise achsbezogen gemäß seiner Gelenke manuell geführt bewegt werden. Alternativ kann der erste Manipulator in weniger Freiheitsgraden, beispielsweise auch nur einem einzigen Freiheitsgrad beispielsweise in einer kartesischen Raumrichtungen oder einer Raumrotation oder bezüglich eines Gelenks manuell geführt bewegt werden. So kann beispielsweise zugelassen sein, dass der erste Manipulator hinsichtlich seines Flansches oder eines Werkzeugbezugspunktes (Tool-Center-Point) nur in den kartesischen Raumrichtungen manuell geführt bewegt werden kann, wo hingegen eine Drehung, wie beispielsweise ein Kippen im kartesischen Raum gesperrt ist d.h. der Flansch oder der Werkzeugbezugspunkt nicht manuell gekippt oder gedreht werden kann. Eine solche Sperrung von Freiheitsgraden für das manuelle Bewegen muss dabei lediglich für den einen, manuell zu bewegenden Manipulator vorgesehen sein, wo hingegen der zweite, automatisch in Abhängigkeit des manuell geführten Manipulators gesteuerte Manipulator keine diesbezügliche Sperrung von Freiheitsgraden benötigt.

Der zweite, automatisch in Abhängigkeit des manuell geführten Manipulators gesteuerte Manipulator kann die Bewegung des manuell geführten Manipulators einfach kopieren d.h. dieselbe Bewegung synchron durchführen. Alternativ kann der automatisch gesteuerte Manipulator eine im geometrischen Sinne nicht-kongruente d.h. ähnliche Bewegung synchron ausführen. Insoweit kann der automatisch gesteuerte Manipulator eine Bewegung des manuell geführten Manipulators unter einem anderen Maßstab kopiert durchführen. Die Bewegung des automatisch gesteuerten Manipulators kann in Abhängigkeit des Anwendungsfalls statt synchron d.h. zeitgleich auch zeitlich versetzt später durchgeführt werden.

Die Steuervorrichtung kann eingerichtet sein, den manuell geführten Manipulator in mindestens einem seiner Freiheitsgrade kraft- und/oder momentengeregelt zu betreiben und einen weiteren Manipulator in Abhängigkeit des kraft- und/oder momentengeregelten Manipulators automatisch zu steuern.

Der manuell geführte Manipulator wird in diesem Fall nicht rein passiv d.h. antriebslos durch einen Benutzer weggedrückt. Statt dessen kann im kraft- und/oder momentengeregelten Betrieb eine vom Benutzer auf den Manipulator aufgebrachte Kraft eine Regelgröße zum automatischen Steuern bzw. Regeln der Position des manuell geführten Manipulators bilden. es kann auch ein haptisches Feedback an den geführten Manipulator zurückgegeben werden. Die Kraft, die der Benutzer dabei fühlt, kann in Abhängigkeit des Prozessstatus bestimmt sein.

Die Steuervorrichtung kann eingerichtet sein, einen der Manipulatoren in mindestens einem seiner Freiheitsgrade mittels Nachgiebigkeitsregelung zu betreiben und einen weiteren Manipulator in Abhängigkeit des nachgiebigkeitsgeregelten Manipulators automatisch zu steuern.

Eine Nachgiebigkeit d.h. Nachgiebigkeitsregelung des Manipulators kann insbesondere mittels einer Impedanzregelung oder einer Admittanzregelung erreicht werden.

Die Steuervorrichtung kann eingerichtet sein, die Nachgiebigkeit des Manipulators mittels Impedanzregelung zu erzeugen.

Eine Impedanzregelung basiert im Gegensatz zur Admittanzregelung auf einer vorhandenen Drehmomentenregelung auf Gelenkebene. Es werden die Abweichung der tatsächlichen Lage von einer definierten Solllage gemessen und entsprechend des gewünschten dynamischen Verhaltens eine gewünschte verallgemeinerte Kraft, bzw. Kräfte und Momente, bestimmt. Diese Kraft kann über die bekannte Kinematik des Manipulators auf entsprechende Gelenkdrehmomente abgebildet werden. Die Drehmomente können schließlich über die unterlagerte Drehmomentenregelung eingestellt werden.

Die Steuervorrichtung kann eingerichtet sein, die Nachgiebigkeit des Manipulators mittels Admittanzregelung zu erzeugen.

Eine Admittanzregelung basiert auf einer vorhandenen Positionsregelung des Manipulators auf Gelenkebene. Hier müssen die von außen auf den Manipulator einwirkenden verallgemeinerten Kräften gemessen werden. Ausgehend von diesen Kräften wird eine, dem gewünschten dynamischen Verhalten entsprechende, Bewegung des Manipulators bestimmt, die über eine inverse Kinematik und die unterlagerte Positionsregelung an den Manipulator kommandiert wird.

Die Erzielung eines gewünschten kartesischen Verhaltens kann basierend auf einer unterlagerten Positions-, Drehmomenten- oder Gelenk-Impedanzregelung erfolgen. Die Realisierung dieser Regelungen können durch die Integration von Momentensensorik in die Gelenke eines Industrieroboters erreicht werden. Der Sensor erfasst dabei das am Abtrieb eines Getriebes wirkende eindimensionale Drehmoment. Diese Größe kann für die Regelung als Messgröße herangezogen werden und ermöglicht somit die Berücksichtigung der Elastizität der Gelenke im Rahmen der Regelung. Insbesondere werden durch eine Drehmomentsensorik, im Gegensatz zur Verwendung eines Kraftmomentensensors an einem Endeffektor des Manipulators, auch diejenigen Kräfte gemessen, die nicht auf den Endeffektor, sondern auf die Glieder des Manipulators und/oder insbesondere auf ein von dem Manipulator gehaltenes Werkstück ausgeübt werden.

Die Steuervorrichtung kann eingerichtet sein, den mindestens einen automatisch gesteuerten Manipulator eine zu dem manuell geführten Manipulator gleichförmige, insbesondere kongruente oder ähnliche Bewegung ausführen zu lassen.

Der mindestens eine automatisch gesteuerte Manipulator kann auch eine völlig andere Bewegung als der manuell geführte Manipulator durchführen, wobei die verschiedenen Bewegungen lediglich zeitlich gekoppelt sind. Alternativ kann jedoch der automatisch gesteuerte Manipulator eine gleichförmige Bewegung ausführen, d.h. der Bewegungspfad des automatisch gesteuerten Manipulators weist im geometrischen Sinne dieselbe Form auf, ohne jedoch gleiche Größe und Orientierung aufweisen zu müssen. Im speziellen Fall einer kongruenten Bewegung fährt der automatisch gesteuerte Manipulator einen Bewegungspfad ab, der im geometrischen Sinne lediglich durch Drehung, Verschiebung, Spiegelung oder einer beliebigen Kombination dieser Abbildungen aus dem vom manuell geführten Manipulator gefahrenen Bewegungspfad entsteht. Bei einer ähnlichen Abbildung fährt der mindestens eine automatisch gesteuerte Manipulator eine vergrößerte oder verkleinerte Abbildung aus dem vom manuell geführten Manipulator gefahrenen Bewegungspfad ab. So kann beispielsweise der manuell geführte Manipulator einen Bewegungspfad bezüglich eines verkleinerten Modells des Werkstücks vorgeben und der mindestens eine automatisch gesteuerte Manipulator kann diesen Bewegungspfad auf einem oder auf mehreren größeren Werkstücken abfahren.

Die Steuervorrichtung ist dabei eingerichtet, den automatisch gesteuerten Manipulator eine zu dem manuell geführten Manipulator gespiegelte Bewegung ausführen zu lassen. Dies ist beispielsweise dann zweckmäßig, wenn ein symmetrisches Werkstück von zwei gegenüberliegenden Seiten in gleicher Weise bearbeitet und/oder gehandhabt werden sollen. Beispielsweise wenn an zwei gegenüberliegenden Seiten zwei identische Bohrungen angebracht werden sollen, oder das Werkstück beispielsweise mittels zweier Greiferhälften, von denen jeweils eine Greiferhälfte von jeweils einem Manipulator geführt wird, an den beiden gegenüberliegenden Seiten gegriffen, insbesondere einklemmend gegriffen werden soll. Dabei kann der manuell geführte Manipulator mit seiner Greiferhälfte durch einen Benutzer lediglich mit geringer Kraft an eine Seite des Werkstücks herangeführt und angedrückt werden. Der automatisch gesteuerte Manipulator folgt dieser Bewegung des manuell geführten Manipulators synchron und insbesondere gespiegelt, wodurch die Greiferhälfte des automatisch gesteuerten Manipulators an einer gegenüberliegenden Seite des Werkstücks mit gleicher Kraft herangeführt und angedrückt wird, wie durch den Benutzer auf der anderen Seite vorgegeben. Bei verformbaren bzw. elastischen Werkstücken kann sich die Klemmkraft aus der Anpresskraft, die durch den Benutzer in den manuell geführten Manipulator bzw. in das Werkstück eingeleitet wird, bestimmen. Die Klammkraft kann auch durch Messung mittels eines oder mehrerer zusätzlicher Kraftsensoren, die beispielsweise an den Greiferhälften vorgesehen sind, bestimmt werden.

In einer alternativen Ausführung kann der Benutzer den manuell geführten Manipulator mit seiner Greiferhälfte mit geringer Kraft an eine Seite des Werkstücks bis zu einer Berührung heranführen und gar nicht oder nur unwesentlich andrücken. Die aufzubringende Klemmkraft kann vorgegeben sein und von dem automatisch gesteuerten Manipulator und dem manuell geführten Manipulator anschließend automatisch andrückend auf das Werkstück aufgebracht werden.

Die Steuervorrichtung kann eingerichtet sein, die Bewegungen der automatisch gesteuerten Manipulatoren und des manuell geführten Manipulators zeitgleich auszuführen. Dies kann in Fällen sinnvoll sein, in denen ein einzelnes Werkstück von wenigstens zwei Manipulatoren gemeinsam gehandhabt werden soll. Dies kann beispielsweise der Fall sein, wenn die Last des Werkstücks teilend getragen werden soll oder eine Stabilitätsanforderung erfüllt werden soll, wie beispielsweise ein Halten des Werkstücks in der Horizontalen durch die Manipulatoren. Aufgrund des manuell führbaren Manipulators kann das von den wenigstens zwei Manipulatoren getragene Werkstück auch durch manuelles Drücken oder Ziehen des Werkstücks bewegt werden. Dabei wird die Kraft, die ein Benutzer auf das Werkstück ausübt auf den manuell führbaren Manipulator übertragen, so dass der manuell führbare Manipulator sich entsprechend bewegt und der wenigstens eine automatisch gesteuerte Manipulator die Bewegung mitmacht, so dass das Werkstück von den Manipulatoren aktiv bewegt wird.

Statt eines derartigen Master-/Slave-Betriebs können auch beide Manipulatoren in einen nachgiebigen Modus geschalten werden. Beide Manipulatoren zielen dabei auf einen Punkt in dem Werkstück und bringen sozusagen eine gewisse Federkraft auf. Dabei ist dann keiner der Manipulatoren im Slave-Betrieb.

So kann beispielsweise ein sehr schweres Werkstück, das mittels der Manipulatoren sozusagen "in der Schwebe" gehalten wird, mit geringem Kraftaufwand beispielsweise mit einer Hand oder sogar nur mittels eines Fingers des Benutzers angehoben bzw. abgesenkt oder in einer horizontalen Richtung verschoben werden.

Die Steuervorrichtung kann jedoch alternativ auch eingerichtet sein, die Bewegungen des automatisch gesteuerten Manipulators zu einer späteren Zeit bzw. zeitversetzt auszuführen. Ein erfindungsgemäßes Verfahren zum Manipulieren von Werkstücken mittels kooperierender Manipulatoren, die von wenigstens einer Steuervorrichtung gesteuert sind, insbesondere mittels eines beschriebenen erfindungsgemäßen Werkstück-Handhabungssystems, weist die folgenden Schritte auf
- manuell geführtes Bewegen mindestens eines der Manipulatoren in wenigstens einem seiner Freiheitsgrade und
- automatisches Steuern mindestens eines weiteren Manipulators in Abhängigkeit des manuell geführten Manipulators;
- manuelles Heranführen einer von dem mindestens einen Manipulator gehaltenen Greiferhälfte an das Werkstück;
- automatisches Heranführen einer von dem mindestens einen weiteren Manipulator gehaltenen weiteren Greiferhälfte an das Werkstück mittels einer zu dem manuell geführten Manipulator gespiegelten Bewegung,
- Einklemmen des Werkstücks zwischen der einen Greiferhälfte des manuell geführten ersten Manipulators und der anderen Greiferhälfte des automatisch gesteuerten zweiten Manipulators an zwei gegenüberliegenden Seiten des symmetrischen Werkstücks.

In einer Ausführungsformen kann das Verfahren den weiteren Schritt aufweisen:
- gemeinsames Bearbeiten und/oder Bewegen desselben Werkstücks durch die kooperierenden Manipulatoren mittels manuellen Führens wenigstens einer der Manipulatoren und/oder des Werkstücks.

In einer weiteren Ausführungsform kann ergänzend zu einem der beschriebenen Verfahren, das Verfahren den weiteren Schritt aufweisen:
- Beschränken wenigstens eines Freiheitsgrades mindestens eines der kooperierenden Manipulatoren Zusammenfassend und mit anderen Worten beschrieben betrifft die Erfindung ein Werkstück-Handhabungssystem, aufweisend mindestens zwei zur Handhabung von Werkstücken kooperierende Manipulatoren d.h. Roboter, die neben dem Manipulator, beispielsweise einem Roboterarm auch eine Steuerungsvorrichtung umfassen. Bedeutend ist, dass mehrere Roboter zusammen verwendet werden. Mindestens einer dieser Roboter kann per Hand geführt werden. Wenn man einen kraft-/momentengeregelten Roboter verwendet, hat das den Vorteil, dass diese Führen sehr dynamisch sein kann. Dieser handgeführte Roboter wird als Eingabegerät verwendet und die anderen Roboter kopieren oder spiegeln dessen Bewegungen.

In einer konkreten Ausführung werden beispielsweise zwei kraft-/momentengeregelte Roboter mit zwei Steuerungsvorrichtungen betrieben. In einer alternativen Ausführung kann auch nur der manuell geführte Roboter kraft-/momentengeregelt betrieben werden und der zweite bzw. weitere Roboter können positionsgesteuert betrieben werden. Die Steuerungen können beispielsweise über eine Schnittstelle mit einem Steuerrechner, beispielsweise ein PC, verbunden sein, auf dem ein Roboterbetriebsprogramm installiert ist. Die beiden Roboter können mit internen Momentensensoren ausgestattet sein und mittels wenigstens einer Robotersteuerung kooperierend betrieben werden.

Bei dieser Ausführung kann folgender, beispielhafter Ablauf realisiert werden:
In einer ersten Phase führ der Benutzer den einen kraft-/momentengeregelten Roboter frei durch den Arbeitsraum zum Werkstück.

In einer zweiten Phase teilt der Benutzer dem System mit, dass die Orientierung des ersten kraft-/momentengeregelten Roboters nun stimmt. Dies kann er beispielsweise tun indem er ein Eingabemittel betätigt, beispielsweise einen elektrischen Schalter oder eine Taste drückt, oder indem er den anderen Roboter antippt d.h. eine Kraft in die Struktur des kraft-/momentengeregelten Roboters einleitet, die von der Steuerungsvorrichtung mittels der Kraft-/Momentensensorik erkannt und dann ausgewertet werden kann.

In einer dritten Phase fährt der zweite kraft-/momentengeregelte Roboter von der anderen Seite an das Werkstück heran. Dabei kann die Größe des Werkstücks bekannt sein. Beispielsweise durch eine Impedanzregelung ist es möglich kleinere Orientierungsfehler auszugleichen. Beide Roboter nehmen anschließend das Werkstück auf, indem sie es zwischen sich einklemmen oder mit Greifern, beispielsweise Haken, aufnehmen.

In einer vierten Phase kann der Benutzer die Position des Werkstücks ändern, indem er die Roboter im Raum bewegt. Arbeitsraumbegrenzungen sorgen dafür, dass das Werkstück nicht in Positionen gebracht werden kann, in denen einer der Roboter das Werkstück nicht mehr erreichen kann.

In einer fünften Phase, wenn die Zielposition erreicht ist, kann der Benutzer den Robotern mitteilen, dass sie das Werkstück wieder loslassen sollen. Dies kann beispielsweise durch eine Geste, wie Tippen an der Roboterstruktur, oder durch auseinander Ziehen der Roboter oder durch Betätigen eines Eingabemittels, wie beispielsweise eines elektrischen Schalters, geschehen.

Gegenüber dem Stand der Technik hat die Erfindung deutliche Vorteile. Generell können Roboter entweder ferngesteuert werden, z.B. über eine 6-D Maus oder über mehrere Steuerknüppel, oder über Kraftmomentensensoren, die üblicher Weise am Flansch vorgesehen sind, im Raum bewegt werden. Roboter auf diese Art und Weise zu bewegen ist jedoch umständlich und langsam. Vorteilhafter ist ein kraft-/momentengeregelter Roboter, welcher durch die integrierte Kraftmomentensensorik und dazugehörigen Modelle frei im Raum bewegt werden kann. Hierbei kann der Roboter auch an seiner Struktur bewegt werden.

Bei kooperierenden Robotern können zwei oder mehr Roboter zusammen an einer Aufgabe arbeiten und ihre Bewegungen im Raum koordinieren. Es ist ohne weiteres möglich, ein Werkstück auf diese Weise mit mehreren Robotern auf einer programmierten Bahn im Raum zu bewegen. Es ist ebenfalls möglich, dies mit einer der beschriebenen Führungsmethoden zu kombinieren.

Erfindungsgemäß können zwei oder mehr kraft-/momentengeregelte Roboter gleichzeitig kollaborierend, d.h. in Zusammenarbeit mit dem Menschen und kooperierend, d.h. in-Zusammenarbeit mehrerer Roboter eingesetzt werden. Die Verwendung von kraft-/momentengeregelten Robotern hat den Vorteil, dass eine sehr dynamische Kollaboration möglich ist. Bei dieser Zusammenarbeit werden die sensorischen Fähigkeiten des Menschen mit den Handhabungsfähigkeiten der Maschine verbunden.

Grundsätzlich können die folgenden Fälle auftreten:
In einem ersten Fall von gemeinsamer Manipulation von Objekten kann das Werkstück von mehreren Robotern gehalten werden.

Der Mensch führt das Werkstück dann zur gewünschten Position. Die Roboter sorgen dafür, dass z.B. die Orientierung des Werkstückes stimmt.

In einem zweiten Fall von gemeinsamer Durchführung eines Prozesses kann das Werkzeug von einem oder mehreren Robotern gehalten werden. Einer dieser Roboter wird von einem Menschen geführt und die anderen kopieren die Bewegungen des ersten Roboters. Ähnlich wie bei der Kopie eines Schlüssels wird der Prozess also an mehreren Stellen identisch durchgeführt.

In einem dritten Fall kann ein Roboter als haptisches Eingabegerät genutzt werden. In diesem Fall stehen die manipulierenden Roboter an einem anderen Ort, als der Roboter, der als Eingabegerät verwendet wird. Den Roboter als Eingabegerät zu verwenden hat den Vorteil, dass die Kinematik des Eingabegerätes genau der des Ausgabegerätes entspricht.

Bemerkenswert ist, dass die Roboter erfindungsgemäß in einer Art von Spiegelbetrieb geschalten werden können, um beispielsweise aufeinander zu fahren zu können. Symmetrie- oder Spiegelpunkt werden gewählt, je nachdem wie die Roboter aufgestellt sind und wie man beispielsweise eine Klemmkraft ausüben will. Spiegelbetrieb kann unter Anderem so aussehen, dass der zweite Roboter nur Teile der Sollposition des ersten Roboters, wie Höhe und laterale Position spiegelt, aber nicht die Richtung zwischen den Robotern. Damit bleibt der zweite Roboter erst mal außerhalb des Arbeitsbereichs und kann bei Bedarf in den Arbeitsbereich geholt werden. Diese Aktion kann auch automatisch ausgeübt werden, wenn der geführte Roboter in einen vordefinierten Arbeitsraum eintritt. Der Arbeitsraum wird damit insoweit zur Schaltfläche.

Es ist somit möglich auf externe Sensorik verzichten zu können, da der Roboter den manuellen Vorgaben, beispielsweise des Benutzers, folgen kann und dem Benutzer auch haptisches Feedback an das Eingabegerät geben kann. Im ersten Fall führt der Mensch einen der kraft-/momentengeregelten Roboter an das Werkstück. Auf Kommando verwendet der zweite kraft-/momentengeregelte Roboter die Informationen über die Position und Orientierung des ersten kraft-/momentengeregelten Roboters, um ein bekanntes Werkstück von der anderen Seite her anzufahren und dann kooperierend aufzunehmen. Es ist also nicht nötig, die Position eines bekannten Werkstücks durch andere Sensorik zu erfassen. Alternativ kann man jedoch einen oder mehrere Sensoren verwenden, um die Position eines bekannten oder unbekannten Objektes zu bestimmen. In diesem Fall können die Roboter die Position des ersten Roboters um das Objekt herum spiegeln - umso näher man den Objekt kommt, umso mehr nähert sich auch der andere Roboter bzw. nähern sich auch die anderen Roboter an.

Bei einem kraft-/momentengeregelten Roboter ist es, auch wie bei positionsgesteuerten Robotern, möglich den Arbeitsraum durch virtuelle Wände zu begrenzen. Dies ist in diesem Zusammenhang möglich, da dadurch sichergestellt werden kann, dass das Werkzeug oder Werkstück in einem Bereich bleibt, der von allen Robotern erreicht werden kann. Des Weiteren kann es in vielen Fällen egal sein, welchen der Roboter man als Eingabegerät verwendet.

Anwendungen für ein erfindungsgemäßes Werkstück-Handhabungssystems sind im Folgenden beispielhaft kurz erwähnt.

Soll beispielsweise ein sehr breites Werkstück, welches bis unter den Rand mit einer Flüssigkeit gefüllt ist, bewegt werden, dann können die Roboter die Orientierung halten und eventuell sogar die dynamischen Bewegungen der Flüssigkeit, wie beispielsweise Wasser, ausgleichen. Es ist dabei auch möglich sehr heiße, kalte oder aus einem anderen Grund gefährliche oder unangenehme Objekte bzw. Flüssigkeiten zu bewegen.

Soll beispielsweise ein Prozess d.h. ein Arbeitsvorgang mehrfach identisch durchgeführt werden, kann ein Benutzer, beispielsweise ein Schreiner zum Beispiel mehrere Stuhllehnen auf einmal herstellen. Die Handarbeit wird hierbei maschinell unterstützt. Um diesen Effekt zu unterstützten, kann man die Steifigkeit der Roboter über Zeit oder Raum leicht variieren lassen. Dadurch wäre dann jedes Stück ein Unikat.

Es können andererseits auch Arbeiten in vom Menschen nicht oder nur schwer zu erreichenden Umgebungen oder in gesundheitsgefährlichen Bereichen, wie beispielsweise in chemisch oder bakteriologisch kontaminierten Bereichen mit den erfindungsgemäßen Werkstück-Handhabungssystemen durchgeführt werden.

Vorteile und weitere Merkmale eines beispielhaften erfindungsgemäßen Werkstück-Handhabungssystems ergeben sich aus der nachfolgenden Beschreibung einer Ausführung unter Bezugnahme auf die beigefügten Figuren. Konkrete Merkmale dieses Ausführungsbeispiels können allgemeine Merkmale der Erfindung darstellen.

Es zeigen:
- Fig. 1: eine perspektivische Ansicht eines Werkstück-Handhabungssystems mit kraft-/momentengeregelten Robotern bzw. Manipulatoren in einem ersten Anwendungsbeispiel;
- Fig. 2: eine perspektivische Ansicht des WerkstückHandhabungssystems mit kraft-/momentengeregelten Robotern bzw. Manipulatoren in einem zweiten Anwendungsbeispiel;
- Fig. 3: eine schematische Darstellung eines beispielhaften Verfahrensablaufs.

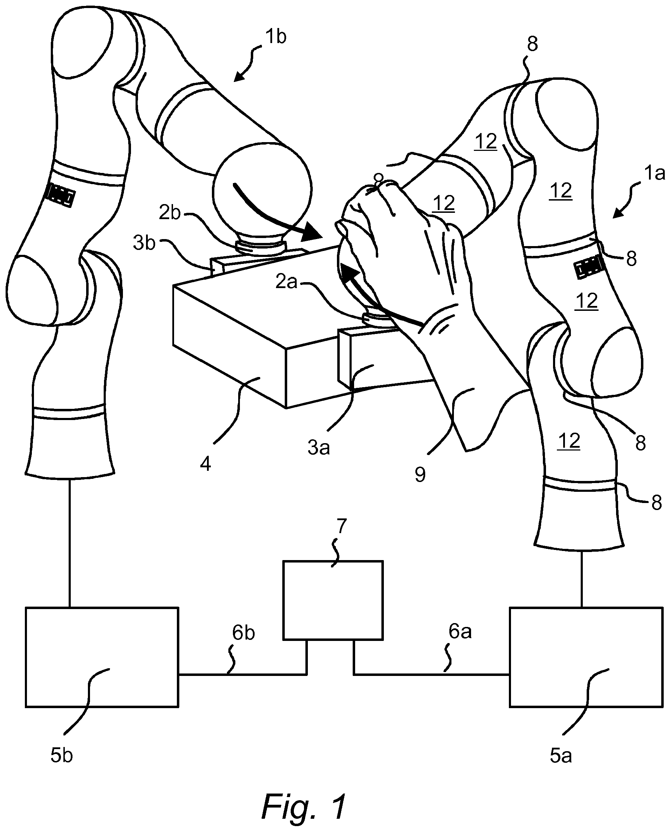

In der Fig. 1 ist ein erster kraft-/momentengeregelter Manipulator 1a und ein zweiter kraft-/momentengeregelter Manipulator 1b dargestellt. Beispielhaft handelt es sich bei den dargestellten Manipulatoren 1a und 1b um Leichtbauroboter des Typs KUKA LBR III.

Jeder Manipulator 1a und 1b weist an seinem Handflansch 2a, 2b einen Endeffektor 3 auf. Der Endeffektor 3 kann auch als Greifer bezeichnet werden. Im dargestellten Ausführungsbeispiel ist der Manipulator 1a zum manuell geführten bewegen eingerichtet und trägt eine erste Greiferhälfte 3a. Der zweite Manipulator 1b wird automatisch angesteuert und trägt eine zweite Greiferhälfte 3b.

Die Manipulatoren 1a und 1b weisen Glieder 12 auf, die durch Gelenke 8 miteinander verbunden sind. Durch Bewegen der Gelenke 8 der Manipulatoren 1a und 1b werden die Endeffektoren 3a und 3b alleine oder gemeinsam mit einem Werkstück 4 bewegt. Der manuell geführte Manipulator 1a ist mit einer ersten Steuervorrichtung 5a verbunden. Der automatisch angesteuert Manipulator 1b ist mit einer zweiten Steuervorrichtung 5b verbunden. Beide Steuervorrichtungen 5a, 5b sind über Schnittstellen-Verbindungen 6a und 6b, die beispielsweise (Fast-Research-Interface; FRI)-Schnittstellen sein können, mit einem gemeinsamen Steuerrechner 7, beispielsweise einem PC, verbunden. Auf dem Steuerrechner 7 kann beispielsweise ein Steuerungsprogramm (OROCOS) installiert sein.

Im gezeigten Ausführungsbeispiel wird der Manipulator 1a, schematisch durch die menschliche Hand 9 angedeutet, manuell geführt. Die Steuervorrichtung 5a ist dabei eingerichtet, den manuell geführten Manipulator 1a in mindestens einem seiner Freiheitsgrade kraft- und/oder momentengeregelt zu betreiben und einen zweiten Manipulator 1b in Abhängigkeit des ersten kraft- und/oder momentengeregelten Manipulators 1a automatisch zu steuern. Die Steuervorrichtung 5a ist im Anwendungsbeispiel eingerichtet, den Manipulator 1a in mindestens einem seiner Freiheitsgrade mittels Nachgiebigkeitsregelung zu betreiben und den zweiten Manipulator 1b in Abhängigkeit des nachgiebigkeitsgeregelten Manipulators 1a automatisch zu steuern. Dabei sind die Steuervorrichtungen 5a, 5b, 7 eingerichtet, den automatisch gesteuerten Manipulator 1b eine zu dem manuell geführten Manipulator 1a gespiegelte Bewegung ausführen zu lassen. Die Bewegungen werden hier insbesondere zeitgleich ausgeführt.

Zunächst wird der erste Manipulator 1a mittels der Hand 9 eines Benutzers manuell an das Werkstück 4 herangeführt. Dabei legt der Benutzer eine Greiferhälfte 3a des Manipulators 1a an eine von zwei gegenüberliegenden Seitenwänden des Werkstücks 4 an. Zeitgleich oder zeitlich später bewegt sich der zweite Manipulator 1b mit seiner Greiferhälfte 3b spiegelsymmetrisch an die gegenüberliegende Seitenwand des Werkstücks 4 heran. Durch Drücken der einen Greiferhälfte 3a des Manipulators 1a gegen die eine Seitenwand des Werkstücks 4 und durch die automatisch gesteuerte Bewegung des zweiten Manipulators 1b wird das Werkstück 4 zwischen den beiden Greiferhälften 3a, 3b eingeklemmt und kann beispielsweise verschoben oder angehoben werden. Eine Klemmkraft kann beispielsweise vorher definiert d.h. vorgegeben werden. Bei bekannten Werkstücken 4 kann mittels des wenigstens einen kraft-/momentengeregelten Manipulators 1a erkannt werden, dass der aktuelle Abstand beispielsweise der beiden Greiferhälften 3a und 3b der Werkstückbreite entspricht und dann die wenigstens zwei Manipulatoren 1a und 1b angesteuert werden, eine Kraft aus das Werkstück 4 auszuüben.

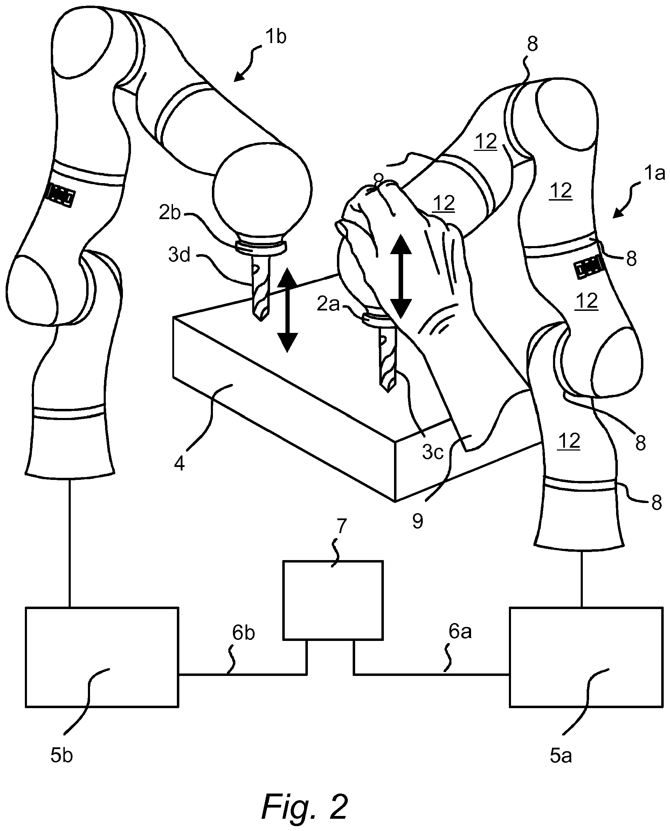

In der Fig. 2 ist ein anderes Anwendungsbeispiel gezeigt. Mittels der Manipulatoren 1a und 1b sollen zwei Bohrungen in demselben Werkstücks 4 gleichzeitig angefertigt werden. Der manuell geführte Manipulator 1a ist durch die Steuervorrichtungen 5a in den drei Raumrotationen gesperrt und kann nur translatorische Bewegungen ausführen. So ist sichergestellt, dass das vom Manipulator 1a gehandhabte Werkzeug, beispielsweise ein Bohrer 3c, stets senkrecht auf das ebene Werkstück 4 auftrifft. Der Manipulator 1a kann dabei manuell an die für die Bohrung gewünschte Stelle des Werkstücks 4 mittels einer Hand 9 des Benutzers translatorisch bewegt werden. Gleichzeitig bewegt der automatisch angesteuerte Manipulator 1b seinen Bohrer 3d an eine zweite Stelle des Werkstücks 4, um eine zur ersten Bohrung symmetrische Bohrung automatisch in das Werkstücks 4 einzubringen. Drückt die Hand 9 des Benutzers den einen Bohrer 3c mittels des ersten Manipulators 1a in das Werkstück, wird gleichzeitig durch den automatisch angesteuerten Manipulator 1b eine symmetrische Bohrung automatisch in das Werkstücks 4 gebohrt. Der automatisch angesteuerten Manipulator 1b bedarf dabei keiner Begrenzung seiner Freiheitsgrade, beispielsweise keine Begrenzung bzw. Sperrung seiner Rotationen, da durch die Sperrung der Rotationen des manuell geführten Manipulators 1a der automatisch angesteuerten Manipulator 1b keine Rotationen durchführen kann. Folglich weist die zweite durch den Bohrer 3d hergestellte Bohrung dieselbe Qualität auf, wie die erste Bohrung des ersten Bohrers 3c.

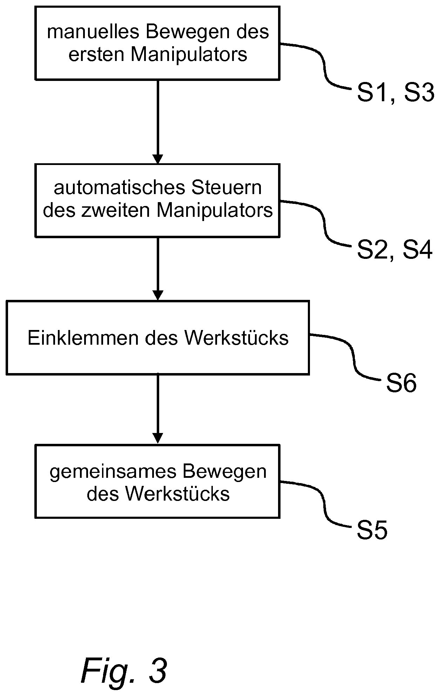

In der Fig. 3 ist ein Ausführungsbeispiel eines erfindungsgemäßen Verfahrens schematisch dargestellt.

In einem ersten Verfahrensschritt S1 erfolgt ein manuell geführtes Bewegen mindestens eines ersten Manipulators 1a in wenigstens einem seiner Freiheitsgrade. Das manuelle Heranführen kann gemäß einem Verfahrensschritt S3 ein Heranführen eines von dem mindestens einen Manipulator 1a, 1b gehaltenen Werkzeugs, insbesondere Greifers oder einer Greiferhälfte, an das Werkstück sein.

In einem zweiten Verfahrensschritt S2 erfolgt ein automatisches Steuern mindestens eines zweiten Manipulators 1b in Abhängigkeit des manuell geführten Manipulators. Das automatische Heranführen kann gemäß einem Verfahrensschritt S4 ein Heranführen eines von dem mindestens einen weiteren Manipulator 1b gehaltenen weiteren Werkzeugs, insbesondere weiteren Greifers oder einer weiteren Greiferhälfte 3a, 3b, an das Werkstück sein.

In einem dritten Verfahrensschritt S6 erfolgt ein Einklemmen des Werkstücks 4 zwischen der einen Greiferhälfte 3a des manuell geführten Manipulators 1a und der anderen Greiferhälfte 3b des automatisch gesteuerten, weiteren Manipulators 1b. Anschließend kann in einem vierten Verfahrensschritt S5 ein gemeinsames Bearbeiten und/oder Bewegen desselben Werkstücks 4 durch die kooperierenden Manipulatoren 1a, 1b mittels manuellen Führens wenigstens einer der Manipulatoren 1a, 1b und/oder des Werkstücks 4 erfolgen.

## Patentansprüche

1. Werkstück-Handhabungssystem, aufweisend mindestens zwei zur Handhabung von Werkstücken (4) kooperierende Manipulatoren (1a, 1b), die mittels wenigstens einer frei programmierbaren Steuervorrichtung (5a, 5b, 7) in drei oder mehr Achsen automatisch steuerbar und/oder programmierbar sind, wobei mindestens ein erster Manipulator (1a) in wenigstens einem seiner Freiheitsgrade zum manuell geführten Bewegen eingerichtet ist, und die Steuervorrichtung (5a, 5b, 7) eingerichtet ist, mindestens einen zweiten Manipulator (1b) in Abhängigkeit des manuell geführten Manipulators (1a) automatisch zu steuern, **dadurch gekennzeichnet, dass** das Werkstück-Handhabungssystem zwei Greiferhälften (3a, 3b) aufweist, von denen jeweils eine Greiferhälfte (3a, 3b) von jeweils einem Manipulator (1a, 1b) getragen und geführt wird, und dass die Steuervorrichtung (5a, 5b, 7) eingerichtet ist, einer der automatisch gesteuerten Manipulatoren (1b) eine zu einem der manuell geführten Manipulatoren (1a) gespiegelte Bewegung ausführen zu lassen, um das Werkstück mittels den zweien Greiferhälften (3a, 3b) an zwei gegenüberliegenden Seiten einklemmend zu greifen.

2. Werkstück-Handhabungssystem nach Anspruch 1, **dadurch gekennzeichnet, dass** die Steuervorrichtung (5a, 5b, 7) eingerichtet ist, den manuell geführten Manipulator (1a) in mindestens einem seiner Freiheitsgrade kraft- und/oder momentengeregelt zu betreiben und einen weiteren Manipulator (1b) in Abhängigkeit des kraft- und/oder momentengeregelten Manipulators (1a) automatisch zu steuern.

3. Werkstück-Handhabungssystem nach Anspruch 1 oder 2, **dadurch gekennzeichnet, dass** die Steuervorrichtung (5a, 5b, 7) eingerichtet ist, einen der Manipulatoren (1a, 1b) in mindestens einem seiner Freiheitsgrade mittels Nachgiebigkeitsregelung zu betreiben und einen weiteren Manipulator (1a, 1b) in Abhängigkeit des nachgiebigkeitsgeregelten Manipulators (1a, 1b) automatisch zu steuern.

4. Werkstück-Handhabungssystem nach Anspruch 3, **dadurch gekennzeichnet, dass** die Steuervorrichtung (5a, 5b, 7) eingerichtet ist, die Nachgiebigkeit des Manipulators (1a, 1b) mittels Impedanzregelung zu erzeugen.

5. Werkstück-Handhabungssystem nach Anspruch 3, **dadurch gekennzeichnet, dass** die Steuervorrichtung (5a, 5b, 7) eingerichtet ist, die Nachgiebigkeit des Manipulators (1a, 1b) mittels Admittanzregelung zu erzeugen.

6. Werkstück-Handhabungssystem nach einem der Ansprüche 1 bis 5, **dadurch gekennzeichnet, dass** die Steuervorrichtung (5a, 5b, 7) eingerichtet ist, den automatisch gesteuerten Manipulator (1b) eine zu dem manuell geführten Manipulator (1a) gleichförmige, insbesondere kongruente oder ähnliche Bewegung ausführen zu lassen.

7. Werkstück-Handhabungssystem nach einem der Ansprüche 1 bis 6, **dadurch gekennzeichnet, dass** die Steuervorrichtung (5a, 5b, 7) eingerichtet ist, die Bewegungen zeitgleich auszuführen.

8. Werkstück-Handhabungssystem nach einem der Ansprüche 1 bis 6, **dadurch gekennzeichnet, dass** die Steuervorrichtung (5a, 5b, 7) eingerichtet ist, die Bewegungen des automatisch gesteuerten Manipulators (1b) zu einer späteren Zeit auszuführen.

9. Verfahren zum Manipulieren von Werkstücken (4) mittels kooperierender Manipulatoren (1a, 1b), die von wenigstens einer Steuervorrichtung (5a, 5b, 7) gesteuert sind, insbesondere mittels eines Werkstück-Handhabungssystems nach einem der Ansprüche 1 bis 8, aufweisend die folgenden Schritte:
- manuell geführtes Bewegen (S1) mindestens eines erster Manipulators (1a) in wenigstens einem seiner Freiheitsgrade,
- automatisches Steuern (S2) mindestens eines zweiten Manipulators (1b) in Abhängigkeit des manuell geführten Manipulators,
- manuelles Heranführen (S3) einer von einem der ersten Manipulatoren (1a) gehaltenen Greiferhälfte (3a) an ein Werkstück (4),
- automatisches Heranführen (S4) einer von einem der zweiten Manipulatoren (1b) gehaltenen weiteren Greiferhälfte (3b) an das Werkstück (4) mittels einer zu dem manuell geführten Manipulator gespiegelten Bewegung und
- Einklemmen (S6) des Werkstücks (4) zwischen der einen Greiferhälfte (3a) des manuell geführten ersten Manipulators (1a) und der anderen Greiferhälfte (3b) des automatisch gesteuerten zweiten Manipulators (1b) an zwei gegenüberliegenden Seiten des Werkstücks.

10. Verfahren nach Anspruch 9, aufweisend den weiteren Schritt:
- gemeinsames Bearbeiten und/oder Bewegen (S5) desselben Werkstücks (4) durch die kooperierenden Manipulatoren (1a, 1b) mittels manuellen Führens wenigstens einer der Manipulatoren (1a, 1b) und/oder des Werkstücks (4).

11. Verfahren nach Anspruch 9 oder 10, aufweisend den weiteren Schritt:
- Beschränken wenigstens eines Freiheitsgrades mindestens eines der kooperierenden Manipulatoren (1a, 1b).

## Claims

1. Workpiece-handling system, having at least two cooperating manipulators (1a, 1b) for handling workpieces (4), which by means of at least one freely programmable control device (5a, 5b, 7) can be controlled automatically and/or programmed in three or more axes, wherein at least one first manipulator (1a) in at least one of its degrees of freedom is configured for manually guided movement, and the control device (5a, 5b, 7) is configured to automatically control at least one second manipulator (1b) as a function of the manually guided manipulator (1a),
**characterised in that**
the workpiece-handling system has two gripper halves (3a, 3b), of which one gripper half (3a, 3b) respectively is supported and guided by one manipulator (1a, 1b) respectively, and **in that** the control device (5a, 5b, 7) is configured to allow one of the automatically controlled manipulators (1b) to perform a movement mirrored to one of the manually guided manipulators (1a), in order to grip the workpiece by clamping by means of the two gripper halves (3a, 3b) on two opposite sides.

2. Workpiece-handling system according to claim 1, **characterised in that** the control device (5a, 5b, 7) is configured to operate the manually guided manipulator (1a) in at least one of its degrees of freedom in a force- and/or torque-controlled manner and to automatically control a further manipulator (1b) as a function of the force- and/or torque-controlled manipulator (1a).

3. Workpiece-handling system according to claim 1 or 2, **characterised in that** the control device (5a, 5b, 7) is configured, to operate one of the manipulators (1a, 1b) in at least one of its degrees of freedom by means of flexibility control and to automatically control a further manipulator (1a, 1b) as a function of the flexibility-controlled manipulator (1a, 1b).

4. Workpiece-handling system according to claim 3, **characterised in that** the control device (5a, 5b, 7) is configured to produce the flexibility of the manipulator (1a, 1b) by means of impedance control.

5. Workpiece-handling system according to claim 3, **characterised in that** the control device (5a, 5b, 7) is configured to produce the flexibility of the manipulator (1a, 1b) by means of admittance control.

6. Workpiece-handling system according to any of claims 1 to 5, **characterised in that** the control device (5a, 5b, 7) is configured, to allow the automatically controlled manipulator (1b) to perform a uniform movement to the manually guided manipulator (1a), in particular a congruent or similar movement.

7. Workpiece-handling system according to any of claims 1 to 6, **characterised in that** the control device (5a, 5b, 7) is configured to perform the movements simultaneously.

8. Workpiece-handling system according to any of claims 1 to 6, **characterised in that** the control device (5a, 5b, 7) is configured to perform the movements of the automatically controlled manipulator (1b) at a later time.

9. Method for manipulating workpieces (4) by means of cooperating manipulators (1a, 1b), which are controlled by at least one control device (5a, 5b, 7), in particular by means of a workpiece-handling system according to any of claims 1 to 8, having the following steps:
- manually guided movement (S1) of at least one first manipulator (1a) in at least one of its degrees of freedom,
- automatically controlling (S2) at least one second manipulator (1b) as a function of the manually guided manipulator,
- manually moving (S3) one gripper half (3a) held by one of the first manipulators (1a) up to a workpiece (4),
- automatically moving (S4) a further gripper half (3b) held by one of the second manipulators (1b) up to the workpiece (4), by means of a movement mirrored to the manually guided manipulator, and
- clamping (S6) the workpiece (4) between one gripper half (3a) of the manually guided manipulator (1a) and the other gripper half (3a, 3b) of the automatically controlled second manipulator (1b) on two opposite sides of the workpiece.

10. Method according to claim 9, having the additional step:
- jointly processing and/or moving (S5) the same workpiece (4) by the cooperating manipulators (1a, 1b) by means of manually guiding at least one of the manipulators (1a, 1b) and/or the workpiece (4).

11. Method according to claim 9 or 10, having the additional step:
- limiting at least one degree of freedom of at least one of the cooperating manipulators (1a, 1b).

## Revendications

1. Système de manipulation de pièces à usiner, comprenant au moins deux manipulateurs (1a, 1 b) coopérant pour la manipulation de pièces à usiner (4), qui peuvent être commandés et/ou programmés automatiquement dans trois axes ou plus au moyen d'au moins un dispositif de commande librement programmable (5a, 5b, 7), dans lequel au moins un premier manipulateur (1a) est configuré dans au moins un de ses degrés de liberté pour un mouvement à guidage manuel, et le dispositif de commande (5a, 5b, 7) est configuré pour commander automatiquement au moins un deuxième manipulateur (1b) en fonction du manipulateur guidé manuellement (1a), **caractérisé en ce que** le système de manipulation de pièces à usiner comprend deux moitiés de préhension (3a, 3b), dont une moitié de préhension (3a, 3b) est portée et guidée par un manipulateur respectif (1a, 1b), et **en ce que** le dispositif de commande (5a, 5b, 7) est configuré pour faire exécuter à l'un des manipulateurs (1b) à commande automatique un mouvement réfléchi par rapport à un des manipulateurs à guidage manuel pour saisir par serrage la pièce à usiner à l'aide des deux moitiés de préhension (3a, 3b) sur deux côtés opposés.

2. Système de manipulation de pièces à usiner selon la revendication 1, **caractérisé en ce que** le dispositif de commande (5a, 5b, 7) est configuré pour faire fonctionner le manipulateur (1a) à guidage manuel de manière réglée en force et/ou en couple dans au moins un de ses degrés de liberté et pour commander automatiquement un autre manipulateur (1b) en fonction du manipulateur (1a) réglé en force et/ou en couple.

3. Système de manipulation de pièces à usiner selon la revendication 1 ou 2, **caractérisé en ce que** le dispositif de commande (5a, 5b, 7) est configuré pour faire fonctionner un des manipulateurs (1a, 1b) dans au moins un de ses degrés de liberté au moyen d'un réglage de flexibilité et pour commander automatiquement un autre manipulateur (1a, 1b) en fonction du manipulateur (1a, 1b) réglé en flexibilité.

4. Système de manipulation de pièces à usiner selon la revendication 3, **caractérisé en ce que** le dispositif de commande (5a, 5b, 7) est configuré pour produire la flexibilité du manipulateur (1a, 1 b) au moyen d'un réglage d'impédance.

5. Système de manipulation de pièces à usiner selon la revendication 3, **caractérisé en ce que** le dispositif de commande (5a, 5b, 7) est configure pour produire la flexibilité du manipulateur (1a, 1b) au moyen d'un réglage d'admittance.

6. Système de manipulation de pièces à usiner selon l'une des revendications 1 à 5, **caractérisé en ce que** le dispositif de commande (5a, 5b, 7) est configuré pour faire exécuter au manipulateur à commande automatique (1 b) un mouvement qui est uniforme, en particulier congruent ou similaire par rapport au manipulateur à guidage manuel (1a).

7. Système de manipulation de pièces à usiner selon l'une des revendications 1 à 6, **caractérisé en ce que** le dispositif de commande (5a, 5b, 7) est configuré pour exécuter les mouvements simultanément.

8. Système de manipulation de pièces à usiner selon l'une des revendications 1 à 6, **caractérisé en ce que** le dispositif de commande (5a, 5b, 7) est configuré pour exécuter les mouvements du manipulateur à commande automatique (1b) à un moment ultérieur.

9. Procédé de manipulation de pièces à usiner (4) au moyen de manipulateurs (1a, 1b) coopérants qui sont commandés par au moins un dispositif de commande (5a, 5b, 7), en particulier au moyen d'un système de manipulation de pièces à usiner selon l'une des revendications 1 à 8, comprenant les étapes suivantes :
- déplacement à guidage manuel (S1) d'au moins un premier manipulateur (1a) dans au moins un de ses degrés de liberté,
- commande automatique (S2) d'au moins un deuxième manipulateur (1b) en fonction du manipulateur à guidage manuel,
- approche manuelle (S3) d'une moitié de préhension (3a) maintenue par un des premiers manipulateurs (1a) sur une pièce à usiner (4),
- approche automatique (S4) d'une autre moitié de préhension (3b), maintenue par l'un des seconds manipulateurs (1b), sur la pièce à usiner (4) au moyen d'un mouvement réfléchi par rapport au manipulateur à guidage manuel et
- serrage (S6) de la pièce à usiner (4) entre une moitié de préhension (3a) du premier manipulateur (1a) à guidage manuel et l'autre moitié de préhension (3b) du second manipulateur (1b) à commande automatique sur deux côtés opposés de la pièce à usiner.

10. Procédé selon la revendication 9, comprenant les étapes suivantes
- usinage et/ou déplacement (S5) conjoint de la même pièce à usiner (4) par les manipulateurs (1a, 1b) coopérants au moyen du guidage manuel d'au moins un des manipulateurs (1a, 1b) et/ou de la pièce à usiner (4).

11. Procédé selon la revendication 9 ou 10, comprenant l'étape suivante :
- limitation d'au moins un degré de liberté d'au moins un des manipulateurs coopérants (1a, 1b).
